# EUROPEAN PATENT SPECIFICATION

(11) **EP 2 848 524 B1**
(45) Date of publication and mention of the grant of the patent: **23.09.2015**
(21) Application number: 14153177.2
(22) Date of filing: 30.01.2014
(51) Int. Cl.: B64C 27/48

(54) **Rotor blade and structural system for coupling the rotor blade in a rotor hub**
Rotorblatt und Struktursystem zur Kopplung des Rotorblatts an eine Rotornabe
Pale de rotor et système structural pour le couplage de la pale de rotor dans un moyeu de rotor

(30) Priority: 16.09.2013 US 201314027733
(43) Date of publication of application: 18.03.2015
(73) Proprietor: Bell Helicopter Textron Inc., Fort Worth, TX 76101 (US)
(72) Inventor: Green, Nathan P., Mansfield, TX Texas 76063 (US); McCullough, John R., Weatherford, TX Texas 76087 (US); Self, Robert A., Fort Worth, TX Texas 76110 (US); Wiinikka, Mark A., Hurst, TX Texas 76053 (US)
(74) Representative: Lawrence, John

(56) References cited:
- EP-A1- 2 457 830
- GB-A- 655 217
- US-A- 2 684 722
- US-A- 4 373 862

## Description

### BACKGROUND

### Technical Field:

The present application relates to a rotor blade, as well as a structural system for coupling the rotor blade to a rotor hub.

### Description of Related Art:

Conventionally, rotor blades have been coupled to the rotor hub in a variety of ways. One conventional rotor blade attachment system involves attaching the rotor blade with two bolts oriented along a chordwise axis at the root end of the rotor blade. Another conventional rotor blade attachment system involves attaching the rotor blade with two bolts oriented along a spanwise axis at the root end of the rotor blade. Though significant improvements in rotor blade attachments have been made, significant room for improvement remains.

Rotor blade couplings are discussed in EP2457830, wherein a rotor blade is mounted to a rotor hub of a helicopter, with two bolts inserted vertically relative to a main plane of said rotor blade into an end of said rotor blade that is generally directed towards the rotor hub.

In US4373862, a helicopter rotor blade to a hub arm attachment is configured to react to centrifugal loads from the blade through a blade cuff, spindle, and elastomeric bearings, which utilizes a pre-loaded bolt through the spindle for load sharing therewith and a spindle integrity monitoring indicator to provide a visual showing of a deviation from the normal load sharing proportion.

In GB655217, a rotor assembly, intended more particularly for use as a torque-counteracting tail rotor, comprises two diametrically opposed blades mounted for pitch-changing movements on stub arms of a hub, the latter being mounted on a hollow driving shaft by pivots whose axis is obliquely inclined to the pitch-changing axis of the blades.

In US2684722, an improved rotor structure is described in which each of the rotor blades are pivotally mounted about an axis on hinge members by means of multiple bolts and lock nuts;
and in US5562416, a mounting assembly for mechanically interconnecting a helicopter rotor blade to a rotor hub assembly is described, comprising a rotor assembly yoke including upper and lower extending arms, which are disposed above and below a hub plate. First fastening members are disposed through a first set of aligned apertures for mechanically coupling clevis arms, a horn/damper fitting, and spacer plates in combination. Second fastening members are disposed through mounting apertures of the rotor assembly yoke and a second set of aligned apertures for mechanically coupling the rotor assembly yoke and the spacer plates in combination.

There is a need for an improved rotor blade, as well as an improved structural system for coupling the rotor blade to a rotor hub.

According to a first aspect of the present invention, there is provided a rotor hub comprising a rotor yoke; a grip member attached to the yoke and having an inboard portion, an upper extension, and a lower extension; and a rotor blade having a root end coupled to the upper extension and the lower extension of the grip member with a first bolt, a second bolt, and a third bolt; wherein the first bolt is located on a spanwise axis of the rotor blade defining the centerline of the rotor blade, the second bolt is offset from the spanwise axis by a first chordwise distance and is offset from the first bolt, away from the root end, by a first spanwise distance, the third bolt is offset from the spanwise axis, on the opposite side to the second bolt, by a second chordwise distance and is offset from the first bolt, away from the root end, by a second spanwise distance.

According to a second aspect of the present invention, there is provided a rotor blade comprising: an airfoil member having a root end portion, a tip end portion, a leading edge portion, and a trailing edge portion; wherein the root end portion includes a first hole, a second hole, and a third hole that are configured for attaching the rotor blade to a rotor hub, the first hole being located on a spanwise axis of the airfoil member defining the centerline of the rotor blade, the second hole being offset from the spanwise axis by a first chordwise distance and being offset from the first hole, away from the root end portion, by a first spanwise distance, the third hole being offset from the spanwise axis, on the opposite side to the second hole, by a second chordwise distance and being offset from the first hole by a second spanwise distance.

Preferably, the rotor hub has a pitch horn. The pitch horn can be coupled to the rotor blade. Alternatively or additionally the pitch horn can be at least partially interposed between the upper extension of the grip member and the rotor blade. In this instance, the pitch horn can also be between the lower extension of the grip member and the rotor blade. Additionally or alternatively the pitch horn can be coupled to a pitch link and to a damper. The damper may also be coupled to the rotor yoke.

In embodiments of the rotor hub at least one of the first bolt, the second bolt, and the third bolt can be a quick release bolt. The quick release bolts can have a handle member that can be actuated.

A spanwise axis can be defined as the major axis of the rotor blade. Accordingly, the spanwise axis is along the longitudinal axis of the rotor blade. A chordwise axis may be defined as being orthogonal to the spanwise axis and in the plane of rotation of the rotor blade.

According to the present invention, the spanwise axis is equal to the centerline of the rotor blade.

In embodiments of the rotor hub and the rotor blade the first spanwise distance can be equal to the second spanwise distance. Alternatively, the first spanwise distance can have a dissimilar magnitude to that of the second spanwise distance.

Furthermore, the first chordwise distance may be of equal magnitude and may also be of opposite direction to the second chordwise distance. Alternatively the first chordwise distance may be of dissimilar magnitude and may also be of opposite direction to the second chordwise distance.

The rotor hub may also have a series of holes, preferably a first hole, a second hole, and a third hole in the rotor blade. In this embodiment, the first hole can be located to accept the first bolt, the second hole can be located to accept the second bolt, and the third hole can be located to accept the third bolt.

Embodiments of the rotor blade of the rotor hub having a series of holes and embodiments of the rotor blade itself may include one or more bushings. For example, a bushing may be located in each of the first hole, the second hole, and the third hole.

Preferably, the rotor hub is a main rotor hub for a rotorcraft such as a helicopter.

In embodiments, the root end of the rotor blade may include a first taper and a second taper. The first and second tapers may form a narrowing of the width of the rotor blade and may also join at a rounded portion that forms the most inboard part of the airfoil member, i.e. the rotor blade. The rounded portion preferably has a radius that is a function of a first distance between the first hole and the edge of the root end. In this embodiment, the first and second tapers may each taper towards the spanwise axis of the rotor blade.

In further embodiments the rotor blade has only three holes provided in the root end portion.

Additionally, in embodiments, the second hole can be provided at a second distance from the leading edge of the airfoil member and the third hole can be provided at a third distance from the trailing edge of the airfoil member. In this embodiment the second and third distances may be preferably substantially equal and/or one or both of the distances may be substantially equal to the first distance between the first hole and the rounded portion.

In a further embodiment, a distance between the centers of the first and second holes is substantially equal to a distance between the centers of the first and third holes. In this embodiment, the first, second and third holes are equidistant and the centers of the holes form the corners of an isosceles triangle.

### DESCRIPTION OF THE DRAWINGS

The novel features believed characteristic of the embodiments of the present application are set forth in the appended claims. However, the embodiments themselves, as well as a preferred mode of use, and further objectives and advantages thereof, will best be understood by reference to the following detailed description when read in conjunction with the accompanying drawings, wherein:
Figure 1 is a side view of a rotorcraft having a rotor blade, according to an example embodiment;
Figure 2 is perspective view of the rotor hub, according to an example embodiment;
Figure 3 is a top view of the rotor hub, according to an example embodiment;
Figure 4 is a top view of the rotor hub, according to an example embodiment;
Figure 5 is a top view of the rotor hub, according to an example embodiment;
Figure 6 is a cross-sectional view of the rotor hub, taken from section lines 6-6 in Figure 5, according to an example embodiment;
Figure 7 is a perspective view of a rotor blade, according to an example embodiment; and
Figure 8 is a partial perspective view of the rotor blade of Figure 7, according to an example embodiment.

### DESCRIPTION OF THE PREFERRED EMBODIMENT

Illustrative embodiments of the apparatus and method are described below. In the interest of clarity, all features of an actual implementation may not be described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

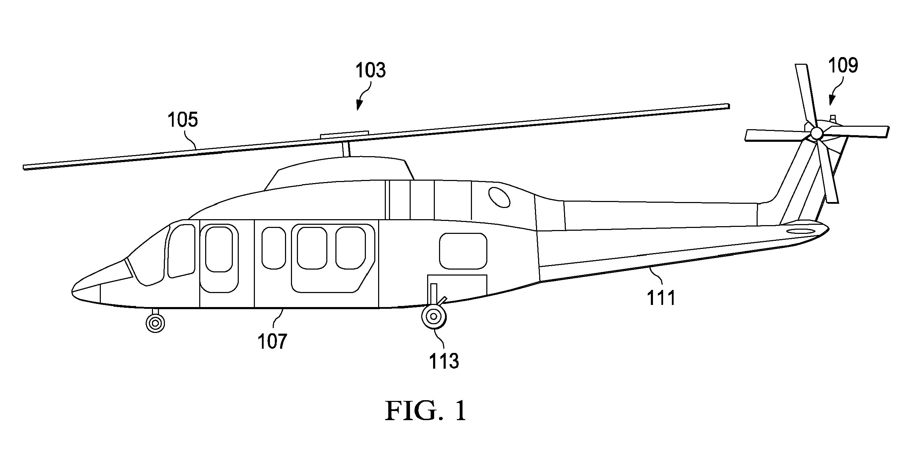

Referring now to Figure 1 in the drawings, a rotorcraft 101 is illustrated. Rotorcraft 101 has a rotor system 103 with a plurality of rotor blades 105. The pitch of each rotor blade 105 can be selectively controlled in order to selectively control direction, thrust, and lift of rotorcraft 101. Rotorcraft 101 further includes a fuselage 107, anti-torque system 109, and an empennage 111. Rotorcraft 101 further includes a landing gear system 113, to provide ground support for the aircraft. It should be appreciated that rotorcraft 101 is merely illustrative of a variety of aircraft that can implement the embodiments disclosed herein. Other aircraft implementations can include hybrid aircraft, tilt rotor aircraft, unmanned aircraft, gyrocopters, and a variety of helicopter configurations, to name a few examples.

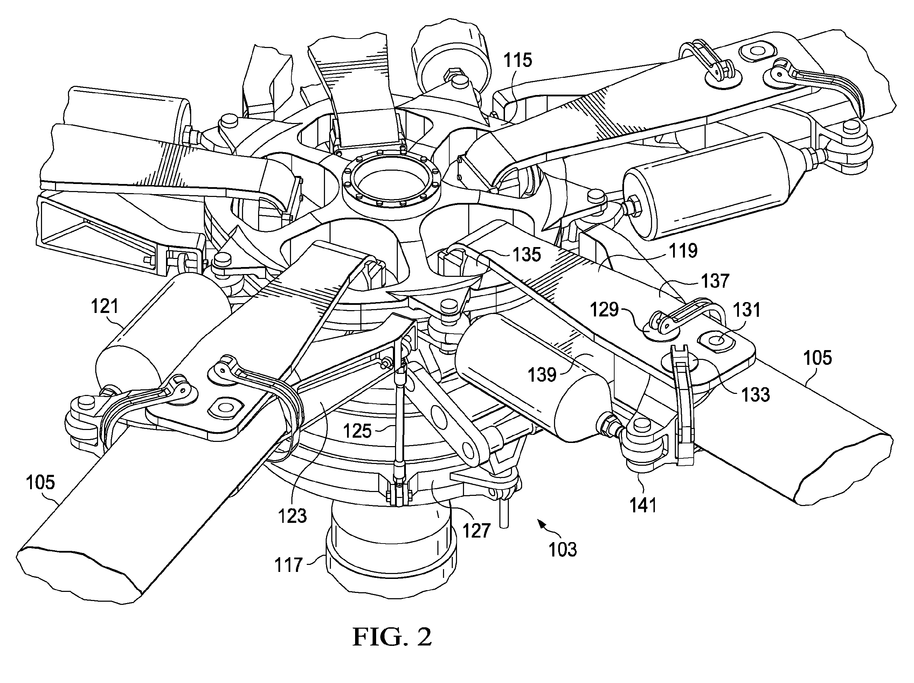

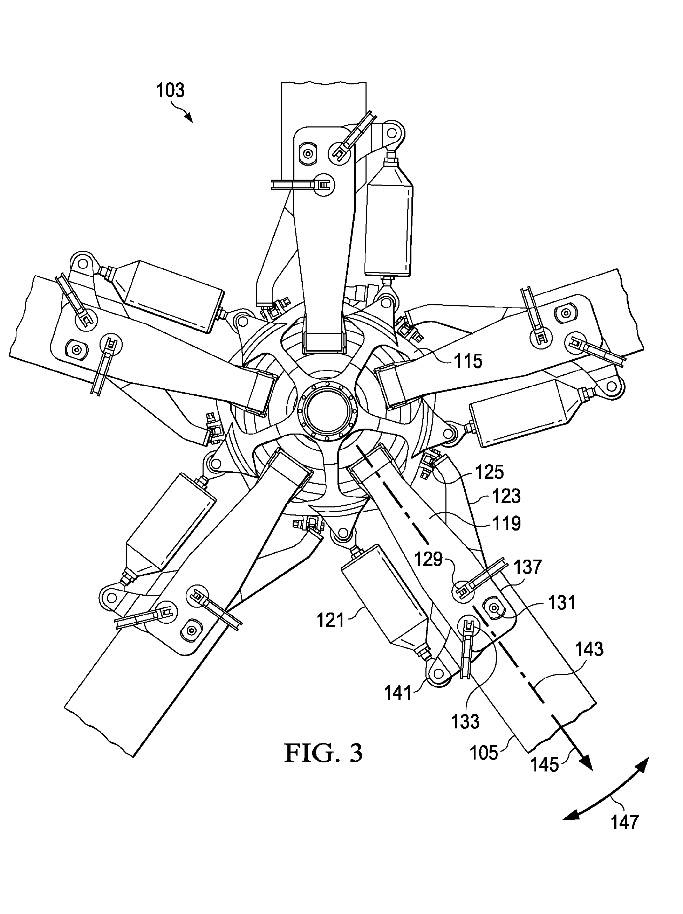

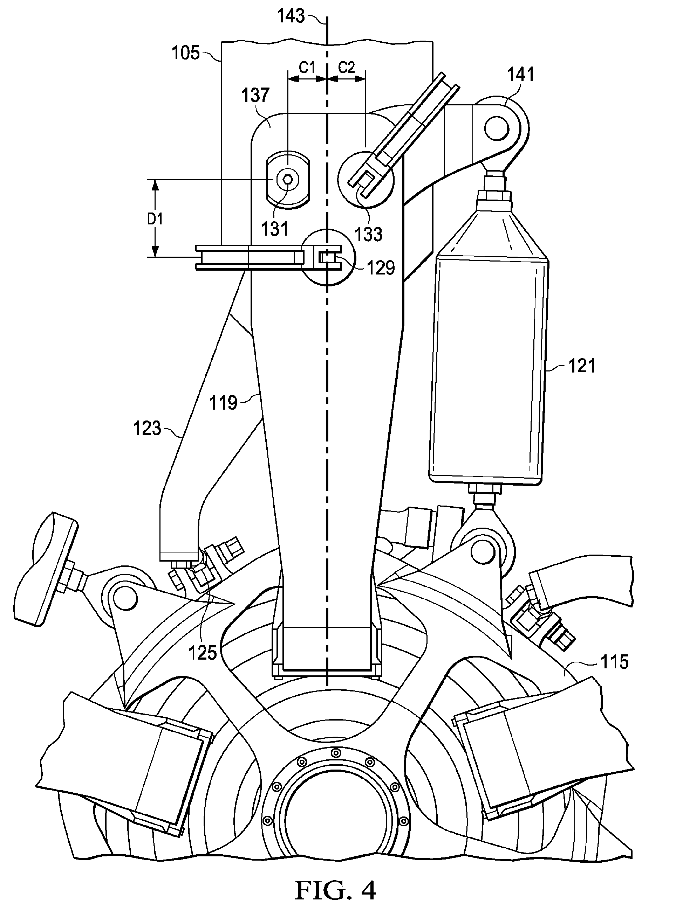

Referring to Figures 2-6, rotor hub 103 is illustrated in further detail. Rotor hub 103 includes a yoke 115 coupled to a mast 117. Each rotor blade 105 is coupled to the yoke 115 with a grip 119. An inboard portion of each grip 119 is secured within an opening of the yoke 115 with a centrifugal force bearing 135. Grip 119 is a single continuous member having an upper extension 137 and a lower extension 139. Rotor blade 105 is attached to the outboard portion of grip 119 with a unique arrangement of a first bolt 129, a second bolt 131, and a third bolt 133. A pitch horn 123 is interposed between rotor blade 105 and the upper and lower extensions 137, 139 of grip 119. A damper 121 is attached between yoke 115 and a damper attachment portion 141 of pitch horn 123.

During operation, dynamic forces act upon rotor blade 105 and associated components of rotor system 103. Primary dynamic forces include a combination of centrifugal force loading in a centrifugal force direction 145, a chordwise bending in a bending direction 147, and a beamwise bending in a bending direction 149. Such loading must be reacted by the attachment mechanism used to attach the rotor blade 105 to the grip 119. Further, torsional loading about pitch change axis 143 can be experienced from aerodynamic loading as well as pitch change inputs from pitch horn 123. Conventional two-bolt attachment arrangements have several shortcomings. For example, when the two bolts are arranged approximately spanwise, the torsional loading about pitch change axis 143 can induce bending along an axis formed by the two spanwise located bolts. In the conventional two-bolt arrangement wherein the two bolts are arrange approximately chordwise, the beam bending in direction 149 can induce bending along an axis formed by the two chordwise located bolts. In these conventional two-bolt arrangements, the two bolts must be sized in order to react the bending loads, which can add weight since a larger diameter bolt can increase edge distance requirements, bolt weight, and rotor blade structure at the root end.

In contrast to conventional two-bolt arrangements, the embodiments of the present disclosure include a three-bolt triangular pattern that collectively react to the operation loads in such a manner so as to reduce the size of the bolts and corresponding attachment lugs in both the rotor blade 105 and grip 119, thereby reducing the overall weight of rotor system 103 and increasing the useful load of the rotorcraft 101. Further, the aerodynamic drag of the three-bolt pattern is actually less than two-bolt chordwise arrangement. Furthermore, utilizing more than three bolts can add unnecessary weight, and further add complexity to the manual rotor blade folding procedure.

The three rotor blade attachment bolt arrangement includes the first bolt 129, which is the most inboard of the three bolts, and lies upon a center spanwise plane of rotor blade 105. The three rotor blade attachment bolt arrangement also includes the second bolt 131 and the third bolt 133 that are aligned along a chordwise plane, and offset from the first bolt 129 in an outboard spanwise direction by a distance D1. The second bolt 131 and the third bolt 133 are offset from the center spanwise plane by chordwise distances C1 and C2, respectively. In the example embodiment, C1 is equal to C2.

The combination and arrangement of the first bolt 129, the second bolt 131, and the third bolt 133 for attachment of the rotor blade 105 to grip 137 has unique advantages. First regarding the beam bending in direction 149, if first bolt 129 weren't present, then second bolt 131 and third bolt 133 would be subject to relatively large bending forces from the beam bending in direction 149 due to the second bolt 131 and third bolt 133 being aligned in a chordwise direction. However, the presence of first bolt 129 acts to greatly reduce the bending forces on second bolt 131 and third bolt 133 by creating a heel/toe effect. Secondly regarding torsionally forces approximately about pitch change axis 143, if either of second bolt 131 or third bolt 133 weren't present, then an input from pitch horn 123 or aerodynamic force, for example, would act to create relatively large bending forces about an axis formed between the first bolt 129 and either of the second bolt 131 or the third bold 133. However, the presence of both second bolt 131 and third bolt 133, in addition to first bolt 129, acts to greatly reduce the bending forces by creating a heel/toe effect.

Further, by locating first bolt 129 inboard to the chordwise oriented second bolt 131 and third bolt 133, the rotor blade 105 can taper down or become more narrow at the root end. The tapering of rotor blade 105 at the root end allows for clearance between the root end of rotor blade 105 and the damper attachment portion 141 of pitch horn. The tapering of the rotor blade 105 is in its width. Additional tapering may also be present in the thickness of the rotor blade 105. In this instance, the width of the rotor blade refers to the dimensions of the rotor blade 105 in the chordwise direction. The thickness of the blade refers to the dimensions of the rotor blade 105 orthogonal to both the spanwise and chordwise directions.

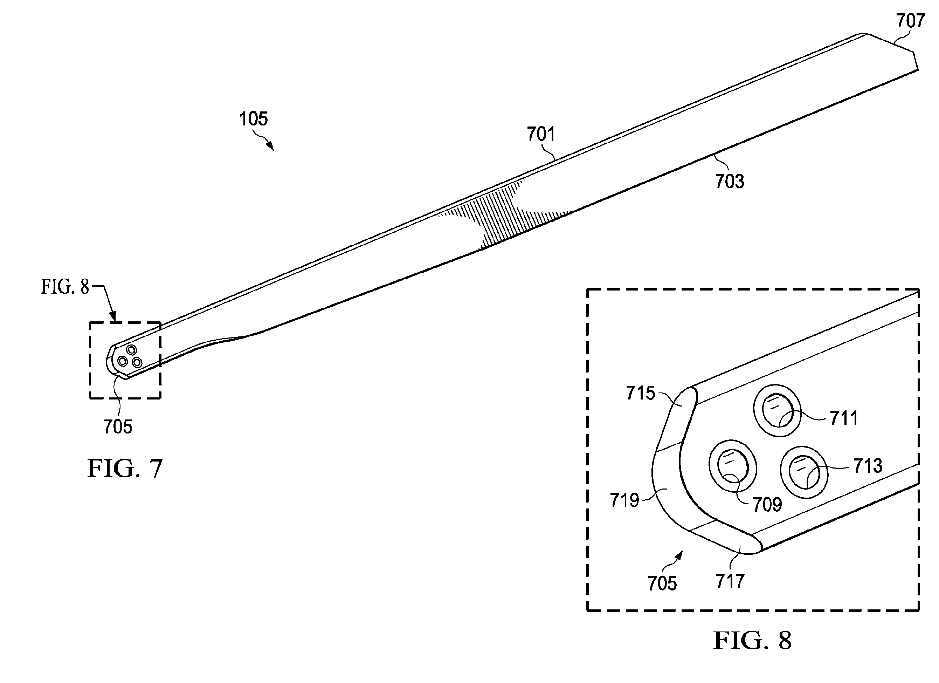

Referring now also to Figures 7 and 8, rotor blade 105 is described in further detail. Rotor blade 105 can have a leading edge 701, a trailing edge 703, a root end 705 and a tip end 707. It should be appreciated that rotor blade 105 can take on a wide variety of configurations. For example, rotor blade 105 can have a degree of built-in twist between root end 705 and tip end 707. Describing another example, rotor blade 105 can have an anhedral tip, or any other desirable aerodynamic profile. Rotor blade 105 includes holes 709, 711, and 713 which provide corresponding apertures for bolts 129, 131, and 133, respectively. Thus, the further disclosure herein regarding the location of bolts 129, 131, and 133, also applies to the location of holes 709, 711, and 713 on rotor blade 105. It should be appreciated that holes 709, 711, and 713 can include bushings, or similar, located therein as a bearing surface for the shanks of bolts 129, 131, and 133.

Rotor blade 105 can include a forward taper 715 and an aft taper 717 that each taper the width of the rotor blade 105 toward a centerline axis of the rotor blade until joining at a rounded portion 719. Rounded portion 719 can have a radius that is a function of a desired edge distance from hole 709. The surface of the rounded portion 719 may be at a constant radius from the center of the first hole 709.

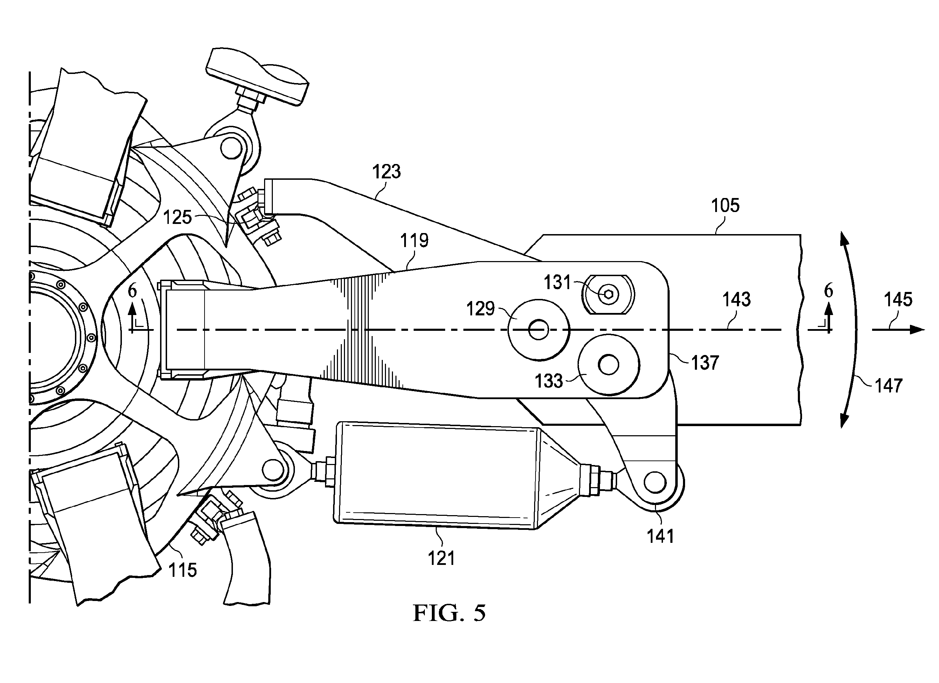

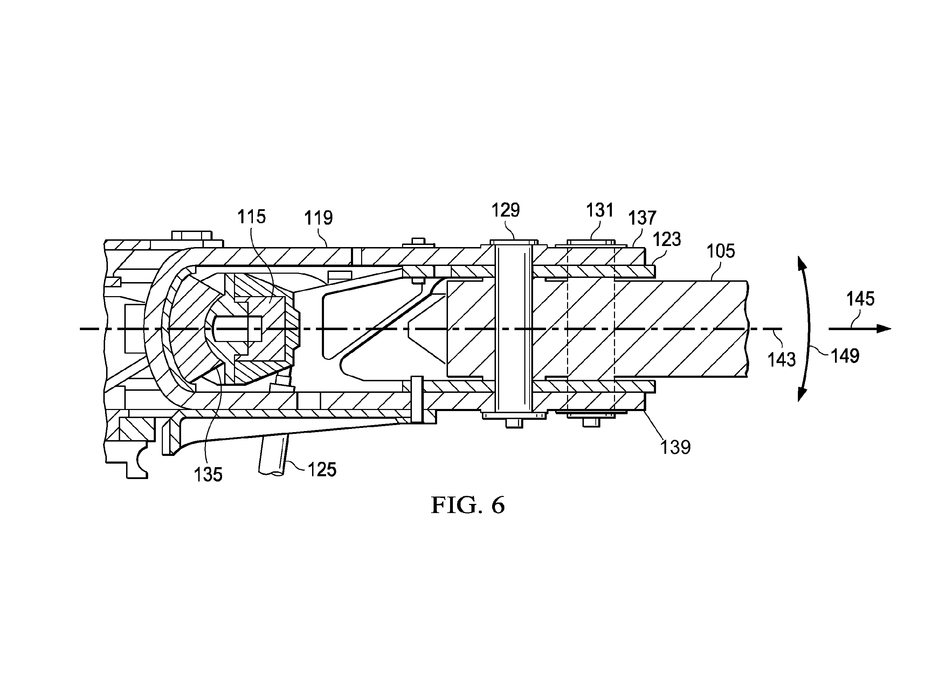

In Figures 2-4, first bolt 129 and third bolt 133 are illustrated as quick removable expandable bolts configured to be removed without the need for a tool. A pin can be removed from the lower portion, allowing the handle to be pivoted, which actuates a cam member allowing the bolt to be removed. Once the first bolt 129 and the third bolt 133 are removed, the rotor blade 105 is free to be rotated about second bolt 131. It should be appreciated that some rotorcraft operators don't have a requirement for the folding of the rotor blades 105; as such, all of the first bolt 129, the second bolt 131, and the third bolt 133 can be conventional bolts. Furthermore, Figures 5 and 6 illustrate all of the first bolt 129, the second bolt 131, and the third bolt 133 as conventional bolts.

The embodiments herein are illustrated with regard to a main rotor assembly on a rotorcraft; however, it should be appreciated that the embodiments may be adaptable to a tail rotor assembly.

The particular embodiments disclosed above are illustrative only, as the apparatus may be modified and practiced in different but equivalent manners apparent to those skilled in the art having the benefit of the teachings herein. Modifications, additions, or omissions may be made to the apparatuses described herein without departing from the scope of the invention. The components of the apparatus may be integrated or separated. Moreover, the operations of the apparatus may be performed by more, fewer, or other components.

Furthermore, no limitations are intended to the details of construction or design herein shown, other than as described in the claims below. It is therefore evident that the particular embodiments disclosed above may be altered or modified and all such variations are considered within the scope of the application. Accordingly, the protection sought herein is as set forth in the claims below.

## Claims

1. A rotor hub (103) comprising:
a rotor yoke (115);
a grip member (119) attached to the yoke and having an inboard portion, an upper extension (137), and a lower extension (139); and
a rotor blade (105) having a root end (705) coupled to the upper extension (137) and the lower extension (139) of the grip member (119) with a first bolt (129), a second bolt (131) and a third bolt (133);
wherein the first bolt (129) is located on a spanwise axis of the rotor blade (105) defining the centerline of the rotor blade, the second bolt (131) is offset from the spanwise axis by a first chordwise distance (C1) and is offset from the first bolt, away from the root end (75), by a first spanwise distance (D1), the third bolt (133) is offset from the spanwise axis, on the opposite side to the second bolt (131), by a second chordwise distance (C2) and is offset from the first bolt, away from the root end (75), by a second spanwise distance.

2. A rotor blade (105) comprising:
an airfoil member having a root end portion (705), a tip end portion (707), a leading edge portion (701), and a trailing edge portion (703);
wherein the root end portion (705) includes a first hole (709), a second hole (711), and a third hole (713) that are configured for attaching the rotor blade (105) to a rotor hub (103), the first hole (709) being located on a spanwise axis of the airfoil member defining the centerline of the rotor blade, the second hole (711) being offset from the spanwise axis by a first chordwise distance (C1) and being offset from the first hole, away from the root end portion (705), by a first spanwise distance (D1), the third hole (713) being offset from the spanwise axis, on the opposite side to the second hole (711), by a second chordwise distance (C2) and being offset from the first hole (709), away from the root end portion (705), by a second spanwise distance.

3. The rotor hub (103) according to claim 1, further comprising:
a pitch horn (123), the pitch horn either: coupled to the rotor blade (105); and/or
at least partially interposed between the upper extension (137) of the grip member (119) and the rotor blade (105), as well as between the lower extension (139) of the grip member (119) and the rotor blade (105);
and/or
coupled to a pitch link and to a damper (121), the damper (121) also being coupled to the rotor yoke (109).

4. The rotor hub (103) according to claim 1 or claim 3, wherein at least one of the first bolt (129), the second bolt (131), and the third bolt (133) is a quick release bolt having a handle member that can be actuated.

5. The rotor hub (103) or rotor blade (105) according to any preceding claim, wherein the first spanwise distance (D1) is equal to the second spanwise distance or wherein the first spanwise distance (D1) has a dissimilar magnitude to that of the second spanwise distance.

6. The rotor hub (103) or rotor blade (105) according to any preceding claim, wherein the first chordwise distance (C1) is of equal magnitude but opposite direction to the second chordwise distance (C2) or wherein the first chordwise distance (C1) is of dissimilar magnitude and opposite direction to the second chordwise distance (C2).

7. The rotor hub (103) according to any preceding rotor hub claim, further comprising:
a first hole (709), a second hole (711), and a third hole (713) in the rotor blade (105), the first hole (709) being located to accept the first bolt (129), the second hole (711) being located to accept the second bolt (131), and the third hole (713) being located to accept the third bolt (133).

8. The rotor hub (103) according to claim 7 or rotor blade (105) according to any preceding rotor blade claim, further comprising a bushing located in each of the first hole (709), the second hole (711), and the third hole (713).

9. The rotor hub (103) according to any preceding rotor hub claim, wherein the rotor hub (103) is a main rotor hub for a rotorcraft (101).

10. The rotor blade (105) according to any preceding rotor blade claim, wherein the root end (705) or root end portion (705) includes a first taper (715) and a second taper (717) that form a narrowing of the rotor blade (105) and join at a rounded portion (719) that forms the most inboard part of the airfoil member.

11. The rotor blade (105) according to claim 10, wherein the rounded portion (719) has a radius that is a function of a first distance between the first hole (709) and the edge of the root end portion (705).

12. The rotor blade (105) according to claim 10 or claim 11, wherein the first and second tapers (715, 717) each taper towards the spanwise axis of the rotor blade (105).

13. The rotor blade (105) according to any preceding rotor blade claim, wherein the first (709), second (711) and third holes (713) are the only holes provided in the root end portion (705).

14. The rotor blade (105) according to claim 11, or any of claims 12 and 13 in combination with claim 11, wherein the second hole (711) is provided at a second distance from the leading edge portion (701) and the third hole (713) is provided at a third distance from the trailing edge portion (703), the second and third distances being preferably substantially equal and optionally or preferably substantially equal to the first distance.

15. The rotor blade (105) according to any preceding rotor blade claim, wherein a distance between the centers of the first and second holes (709, 711) is substantially equal to a distance between the centers of the first and third holes (709, 713).

## Patentansprüche

1. Eine Rotornabe (103), bestehend aus:
einem Rotor-Joch (115);
einem Einspann-Teil (119), das am Joch befestigt ist und ein Innenteil, eine obere Verlängerung (137) und eine untere Verlängerung (139) aufweist; und
einem Rotorblatt (105) mit einem Fußende (705), das mit der oberen Verlängerung (137) und der unteren Verlängerung (139) des Einspann-Teils (119) mit einem ersten Bolzen (129), einem zweiten Bolzen (131) und einem dritten Bolzen (133) verbunden ist;
wobei sich der erste Bolzen (129) an einer spannweitigen Achse des Rotorblattes (105) befindet und die Mittelachse des Rotorblattes definiert,
der zweite Bolzen (131) ist von der spannweitigen Achse um einen ersten Abstand in Profilsehnenrichtung (C1) versetzt und ist vom ersten Bolzen, weg vom Fußende (75), um einen ersten spannweitigen Abstand (D1) versetzt, der dritte Bolzen (133) ist von der spannweitigen Achse, auf der gegenüberliegenden Seite des zweiten Bolzens (131), um einen zweiten Abstand in Profilsehnenrichtung (C2) versetzt und ist vom ersten Bolzen, weg vom Fußende (75), um einen zweiten spannweitigen Abstand versetzt.

2. Ein Rotorblatt (105), bestehend aus:
einem Tragflügel-Teil mit einem Fußende-Teil (705), einem Kopfende-Teil (707), einem Eintrittskanten-Teil (701) und einem Austrittskanten-Teil (703);
wobei das Fußende-Teil (705) eine erste Bohrung (709), eine zweite Bohrung (711) und eine dritte Bohrung (713) einschließt, die so gestaltet sind, dass sie
das Rotorblatt (105) an einer Rotornabe (103) befestigen können, die erste Bohrung (709) ist dabei an einer spannweitigen Achse des Tragflügel-Teils platziert und definiert die Mittellinie des Rotorblattes, die zweite Bohrung (711) ist von der spannweitigen Achse um einen ersten Abstand in Profilsehnenrichtung (C1) versetzt, und ist von der ersten Bohrung, weg vom Fußende-Teil (705), um einen ersten spannweitigen Abstand (D1) versetzt, die dritte Bohrung (713) ist von der spannweitigen Achse, auf der gegenüberliegenden Seite der zweiten Bohrung (711), um einen zweiten Abstand in Profilsehnenrichtung (C2) versetzt und ist von der ersten Bohrung (709), weg vom Fußende-Teil (705), um einen zweiten spannweitigen Abstand versetzt.

3. Die Rotornabe (103) gemäß Anspruch 1, darüberhinaus bestehend aus:
einem Blattverstellhebel (123), der Blattverstellhebel ist dabei entweder: mit dem Rotorblatt (105) verbunden; und/oder
mindestens teilweise zwischen der oberen Verlängerung (137) des Einspann-Teils (119) und dem Rotorblatt (105) eingefügt, wie auch zwischen der unteren Verlängerung (139) des Einspannelements (119) und dem Rotorblatt (105);
und/oder
mit einer Steuerstange und einem Dämpfer (121) verbunden, der Dämpfer (121) ist dabei auch an das Rotor-Joch (109) gekoppelt.

4. Die Rotornabe (103) gemäß Anspruch 1 oder Anspruch 3, wobei mindestens entweder der erste Bolzen (129), der zweite Bolzen (131) oder der dritte Bolzen (133) ein Schnellverschluss-Bolzen mit einem Griff-Teil ist, das betätigt werden kann.

5. Die Rotornabe (103) oder das Rotorblatt (105) gemäß eines der vorhergehenden Ansprüche, wobei der erste spannweitige Abstand (D1) gleich des zweiten spannweitigen Abstands ist oder wobei der erste spannweitige Abstand (D1) eine ungleiche Länge im Vergleich zum zweiten spannweitigen Abstand hat.

6. Die Rotornabe (103) oder das Rotorblatt (105) gemäß eines der vorhergehenden Ansprüche, wobei der erste Abstand in Profilsehnenrichtung (C1) eine gleiche Länge, aber in entgegengesetzter Richtung zum zweiten Abstand in Profilsehnenrichtung (C2), aufweist oder wobei der erste Abstand in Profilsehnenrichtung (C1) eine ungleiche Länge und in entgegengesetzter Richtung zum zweiten Abstand in Profilsehnenrichtung (C2) hat.

7. Die Rotornabe (103) eines der vorhergehenden Ansprüche, darüberhinaus bestehend aus:
einer ersten Bohrung (709), einer zweiten Bohrung (711) und einer dritten Bohrung (713) im Rotorblatt (105), die erste Bohrung (709) ist dabei so platziert, dass sie den ersten Bolzen (129) aufnehmen, die zweite Bohrung (711) ist so platziert, dass sie den zweiten Bolzen (131) aufnehmen und die dritte Bohrung (713) ist so platziert, dass sie den dritten Bolzen (133) aufnehmen kann.

8. Die Rotornabe (103) gemäß Anspruch 7 oder das Rotorblatt (105) gemäß eines der vorhergehenden Rotorblatt-Ansprüche, darüberhinaus bestehend aus einer Reduzierbuchse in der ersten Bohrung (709), der zweiten Bohrung (711) und der dritten Bohrung (713).

9. Die Rotornabe (103) eines der vorhergehenden Rotornaben-Ansprüche, wobei die Rotornabe (103) eine Hauptrotornabe für einen Drehflügler (101) ist.

10. Das Rotorblatt (105) gemäß eines der vorhergehenden Rotorblatt-Ansprüche, wobei das Fußende (705) oder das Fußende-Teil (705) einen ersten Konus (715) und einen zweiten Konus (717) aufweisen, die eine Verengung des Rotorblattes (105) hervorrufen und in einem abgerundeten Teil (719) zusammenlaufen, der den innersten Teil des Tragflächen-Teils bildet.

11. Das Rotorblatt (105) gemäß Anspruch 10, wobei der abgerundete Teil (719) einen Radius aufweist, der eine Funktion eines ersten Abstands zwischen der ersten Bohrung (709) und der Kante des Fußende-Teils (705) ist.

12. Das Rotorblatt (105) gemäß Anspruch 10 oder Anspruch 11, wobei sich der erste und zweite Konus (715, 717) zur spannweitigen Achse des Rotorblattes (105) verjüngen.

13. Das Rotorblatt (105) gemäß eines der vorhergehenden Rotorblatt-Ansprüche, wobei die erste (709), zweite (711) und dritte Bohrung (713) die einzigen Bohrungen im Fußende-Teil (705) sind.

14. Das Rotorblatt (105) gemäß Anspruch 11 oder eines der Ansprüche 12 und 13 in Kombination mit Anspruch 11,
wobei die zweite Bohrung (711) in einem zweiten Abstand vom Eintrittskanten-Teil (701) und die dritte Bohrung (713) in einem dritten Abstand vom Austrittskanten-Teil (703) angebracht ist, der zweite und dritte Abstand sind vorzugsweise und im Wesentlichen gleich und optional oder vorzugsweise im Wesentlichen gleich zum ersten Abstand.

15. Das Rotorblatt (105) gemäß eines der vorhergehenden Rotorblatt-Ansprüche, wobei der Abstand zwischen der Mitte der ersten und der zweiten Bohrung (709, 711) im Wesentlichen gleich einem Abstand zwischen der Mitte der ersten und dritten Bohrung (709, 713) ist.

## Revendications

1. Moyeu de rotor (103) comprenant :
un cardan de rotor (115) ;
un élément de saisie (119) fixé au cardan et doté d'une partie intérieure, d'une extension supérieure (137), et d'une extension inférieure (139) ; et
une pale de rotor (105) dotée d'une extrémité racine (705) couplée à l'extension supérieure (137) et à l'extension inférieure (139) du segment de saisie (119) comportant une première cheville (129), une deuxième cheville (131) et une troisième cheville (133) ;
dans lequel la première cheville (129) se trouve sur un axe d'envergure de la pale de rotor (105) définissant la ligne centrale de la pale de rotor,
la deuxième cheville (131) est décalée de l'axe d'envergure d'une première distance (C1) et est décalée de la première cheville, à l'écart de l'extrémité racine (75), d'une distance d'envergure (D1), la troisième cheville (133) est décalée de l'axe d'envergure, sur la face opposée à la deuxième cheville (131), d'une seconde distance en corde (C2) et est décalée de la première cheville, à l'écart de l'extrémité racine (75), d'une seconde distance d'envergure.

2. Pale de rotor (105) comprenant :
un élément de voilure ayant un élément d'extrémité racine (705), un élément d'extrémité pointe (707), un élément de bord d'attaque (701), et un élément de bord de fuite (703) ;
dans laquelle le segment d'extrémité racine (705) comporte un premier trou (709), un deuxième trou (711), et un troisième trou (713) qui sont conçus pour attacher la pale de rotor (105) à un moyeu de rotor (103), le premier trou (709) étant situé sur un axe d'envergure de l'élément de voilure définissant la ligne centrale de la pale de rotor, le deuxième trou (711) étant décalé de l'axe d'envergure d'une première distance en corde (C1) et étant décalé du premier trou, à l'écart du segment d'extrémité racine (705), d'une première distance d'envergure (D1), le troisième trou (713) étant décalé de l'axe d'envergure, sur la face opposée au deuxième trou (711), d'une seconde distance en corde (C2) et étant décalé du premier trou (709), à l'écart du segment d'extrémité racine (705), d'une seconde distance d'envergure.

3. Moyeu de rotor (103) selon la revendication 1, comprenant en outre :
un levier de pas (123), le levier de pas étant soit : couplé à la pale de rotor (105) ; et/ou au moins partiellement interposé entre l'extension supérieure (137) du segment de saisie (119) et la pale de rotor (105), de même qu'entre l'extension inférieure (139) du segment de saisie (119) et la pale de rotor (105) ;
et/ou
couplé à une bielle de pas et à un amortisseur (121), l'amortisseur (121) étant aussi couplé au cardan de rotor (109).

4. Moyeu de rotor (103) selon la revendication 1 ou la revendication 3, dans laquelle au moins une parmi la première cheville (129), la deuxième cheville (131), et la troisième cheville (133) est une cheville à relâchement rapide possédant un élément poignée qui peut être actionné.

5. Moyeu de rotor (103) ou pale de rotor (105) selon l'une quelconque des revendications précédentes, dans laquelle la première distance d'envergure (D1) est égale à la seconde distance d'envergure ou dans laquelle la première distance d'envergure (D1) a une amplitude différente de celle de la seconde distance d'envergure.

6. Moyeu de rotor (103) ou pale de rotor (105) selon l'une quelconque des revendications précédentes, dans laquelle la première distance en corde (C1) a une amplitude égale mais un sens opposé à ceux de la seconde distance en corde (C2) ou dans laquelle la première distance en corde (C1) a une amplitude différente de celle de la seconde distance en corde (C2).

7. Moyeu de rotor (103) selon l'une quelconque des revendications précédentes concernant le moyeu de rotor, comprenant en outre :
un premier trou (709), un deuxième trou (711), et un troisième trou (713) dans la pale de rotor (105), le premier trou (709) étant placé de manière à recevoir la première cheville (129), le deuxième trou (711) étant placé de manière à recevoir la deuxième cheville (131), et le troisième trou (713) étant placé de manière à recevoir la troisième cheville (133).

8. Moyeu de rotor (103) selon la revendication 7 ou pale de rotor (105) selon l'une quelconque des revendications précédentes concernant la pale de rotor, comprenant en outre un coussinet situé dans chacun des premier trou (709), deuxième trou (711), et troisième trou (713).

9. Moyeu de rotor (103) selon l'une quelconque des revendications précédentes concernant le moyeu de rotor,
dans lequel le moyeu de rotor (103) est un moyeu de rotor principal pour gyravion (101).

10. Pale de rotor (105) selon l'une quelconque des revendications précédentes concernant la pale de rotor, dans laquelle l'extrémité racine (705) ou le segment d'extrémité racine (705) comprend un premier biseau (715) et un second biseau (717) qui créent un rétrécissement de la pale de rotor (105) et se rejoignent au niveau d'une partie arrondie (719) qui forme la partie la plus intérieure de l'élément de voilure.

11. Pale de rotor (105) selon la revendication 10, dans laquelle la partie arrondie (719) a un premier rayon qui est fonction d'une première distance entre le premier trou (709) et le bord du segment d'extrémité racine (705).

12. Pale de rotor (105) selon la revendication 10 ou la revendication 11, dans laquelle les premier et second biseaux (715, 717) s'effilent chacun vers l'axe d'envergure de la pale de rotor (105).

13. Pale de rotor (105) selon l'une quelconque des revendications précédentes concernant le moyeu de rotor, dans laquelle les premier (709), deuxième (711) et troisième (713) trous sont les seuls trous pratiqués dans le segment d'extrémité racine (705).

14. Pale de rotor (105) selon la revendication 11, ou l'une quelconque des revendications 12 et 13 en combinaison avec la revendication 11,
dans laquelle the deuxième trou (711) est pratiqué à une seconde distance du segment de bord d'attaque (701) et le troisième trou (713) est pratiqué à une troisième distance du segment de bord de fuite (703), les deuxième et troisième distances étant de préférence sensiblement égales et en option ou de préférence sensiblement égales à la première distance.

15. Pale de rotor (105) selon l'une quelconque des revendications précédentes concernant la pale de rotor, dans laquelle une distance entre les centres des premier et deuxième trous (709, 711) est sensiblement égale à une distance entre les centres des premier et troisième trous (709, 713).
